Europäisches Patentamt

European Patent Office

Office européen des brevets

(11) Publication number: **0 041 146**
**B1**

(12) **EUROPEAN PATENT SPECIFICATION**

(45) Date of publication of patent specification: **16.04.86**

(51) Int. Cl.⁴: **G 01 S 3/78**

(21) Application number: **81103512.0**

(22) Date of filing: **08.05.81**

(54) Method and apparatus for determination of angle incidence of electromagnetic energy.

(30) Priority: **02.06.80 US 155887**

(43) Date of publication of application:
**09.12.81 Bulletin 81/49**

(45) Publication of the grant of the patent:
**16.04.86 Bulletin 86/16**

(84) Designated Contracting States:
**DE FR GB SE**

(56) References cited:
**DE-A-1 203 489**
**DE-A-2 850 743**
**DE-B-1 240 295**
**GB-A-1 431 783**
**US-A-3 838 277**
**US-A-3 924 954**
**US-A-3 987 297**

(73) Proprietor: **Santa Barbara Research Center**
**75 Coromar Drive**
**Goleta California 93017 (US)**

(72) Inventor: **Gardner, Leland V.**
**P.O. Box 1789**
**Buellton, California 93427 (US)**

(74) Representative: **Patentanwälte Kohler -**
**Schwindling - Späth**
**Hohentwielstrasse 41**
**D-7000 Stuttgart 1 (DE)**

Courier Press, Leamington Spa, England.

## Description

According to a first aspect, the invention relates to a method for deriving the angle of incidence $\theta$ of electromagnetic energy with respect to a reference direction, in which the energy is directed to and focused at two image portions in such a way that the power distribution $P_1$, $P_2$ between said image portions varies with said angle of incidence $\theta$, and in which the power distribution is measured and the angle of incidence is calculated from the measured power distribution.

Such a method is disclosed in US—A—39 87 297. In this known method, two different optical systems are used to focus the incident electromagnetic energy on the said two image portions. Each optical system includes first means for focusing the incident electromagnetic energy on a filter plate which provides attenuation of the incident radiation as a function of the spot where the focused energy hits its surface. Thus, the attenuation is a function of the angle of incidence with reference to the optical axis of each system. The energy transmitted by the filter plate of each optical system is in its turn focused on an associated detector element, so that the output signal of each detector element is again a function of the angle of incidence of the electromagnetic energy. Since the optical axes of the two optical systems have different directions, the output signals of the two detectors may be compared in order to determine the angle of incidence of the electromagnetic energy with respect to a boresight axis which is defined by the bisectrix of the said optical axes. It is evident that the known method needs a very complicated system for its performing so that its application is rather expensive. Moreover, the system for performing this method must be thoroughly adjusted, so that it is also easily susceptible to misplacements, and thus not very appropriate for being used under hard conditions.

The US—A—38 38 277 discloses an optical sensor including an elemental block of transparent material having a first planar surface forming a transparent input aperture, a parabolic interior reflector surface and an imaging surface on which a line image reflected from said parabolic surface is formed. Detector means are mounted on the imaging surface along the line image to develop an electrical signal corresponding to the power of electromagnetic energy impinging thereon. This sensor does not provide signals which would allow deriving the angle of incidence of electromagnetic energy, but only produces a signal having a maximum when the angle of incidence is 0. Thus, the known sensor can only be used to detect the alignment with a distant energy source, but does not provide signals which would allow deriving the angle of incidence of electromagnetic energy with respect to a boresight axis.

Thus, it is an object of the present invention to provide an improved method for deriving the angle of incidence of electromagnetic energy, which may be performed by means of simple apparatus, which allows a very precise measurement and which also provides fast results.

The objects of this invention are achieved in that the electromagnetic energy is reflected to a single line image having a total width W and being substantially centered on that reference direction, thereby defining two halves, each of width W/2, of the line image, the power distribution therealong being uniform except for its end sections each having a width $\Delta W$ varying with the angle of incidence, the power in one of said end sections being doubled and in the other one being zero, so that each half of the line image receives the power

$$P_1 = K\left(\frac{W}{2} + \Delta W\right)$$

or

$$P_2 = K\left(\frac{W}{2} - \Delta W\right),$$

respectively, where K is a proportional constant depending on the mode of reflecting and focusing of said incident energy and $\Delta W$ is a function of the sine of the angle of incidence $\theta$, and that each half of the line image forms one of said image portions in which the power distribution is measured.

According to another aspect, this invention relates also to an optical receiver for performing the inventive method. Although the optical sensor disclosed in US—A—38 38 277 does not allow the deriving of the angle of incidence of electromagnetic energy, the inventive optical receiver has a somewhat similar construction, in that it includes an element block of transparent material having a first planar surface forming a transparent input aperture, a parabolic interior reflecting surface, an image receiving surface on which a line image reflected from said parabolic surface is formed, and detector means mounted on the image receiving surface along the line image to develop an electrical signal corresponding to the power of electromagnetic energy impinging thereon. However, in contrast to the known sensor, second and third planar surfaces extend normally from said first planar surface and from said image receiving surface so as to define a volume therebetween, said second and third surfaces shielding a first end section of the image receiving surface against electromagnetic energy having an angle of incidence different from zero, and providing reflective interior side walls for said volume reflecting a portion of said electromagnetic energy onto a second end section of the image receiving surface, and that the detector means is comprised of two detectors positioned along the line image and each covering a half of the line image.

The present invention is simple, accurate and inexpensive compared to the above-mentioned prior art methods and systems. While specific embodiments are disclosed herein, it is understood that the teachings of this invention may be employed to provide detector elements of diverse sizes, shapes, and materials without departing from the scope of this invention.

Brief description of the drawings

Figure 1 is a side elevational view of an embodiment utilizing the principles of this invention;

Figure 2 is a bottom view of the embodiment of Figure 1;

Figure 3 is an illustrative top view of the embodiment of Figure 1;

Figure 4 is an illustrative top view of a half-section of the invention;

Figure 5 is a graphical representation of the power output of the invention as a function of roll angle;

Figure 6 is a graphical representation similar to that of Figure 5 showing, in addition, the power distribution beyond 22.5 degrees azimuth; and

Figure 7 is a side elevational view of an alternative embodiment of the invention.

Figure 8 is a perspective view of an alternative embodiment of the invention.

Detailed description of the invention

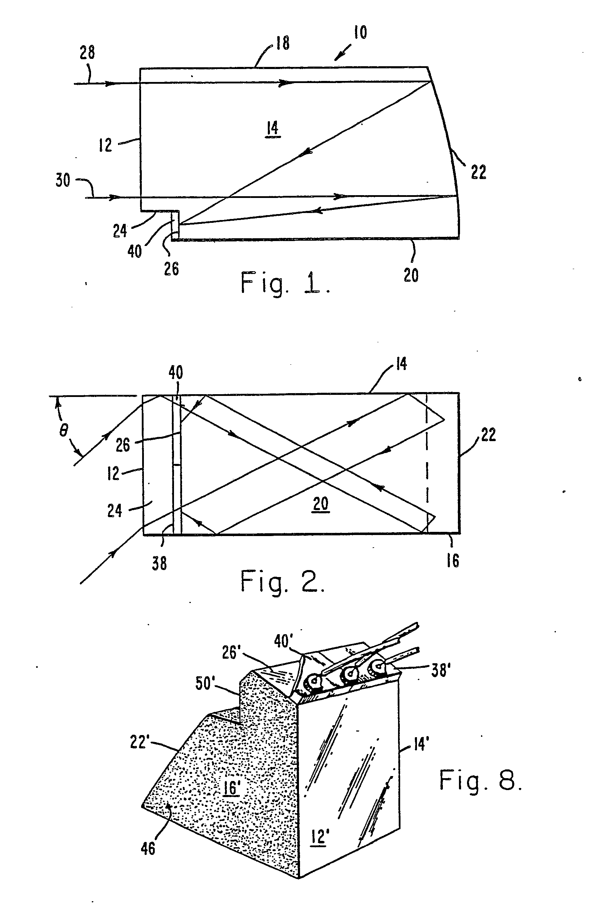

An embodiment utilizing the principles of the present invention is shown in Figure 1. Figure 1 shows a side elevational view of an optic receiver 10. Figure 2 shows a bottom view. The receiver 10 is made of a single block of solid glass or other suitable material. It has a flat, rectangular, transparent forward surface 12 which provides an input aperture. Two generally flat, reflective surfaces 14 and 16 delimit the sides of the receiver 10. Surfaces 18 and 20 are nonfunctional and would be ground and painted black. A parabolic cylinder or elliptic reflector 22 provides a rear surface for the receiver 10.

In the case of an ellipse having a major semi-axis being very large relative to its minor semi-axis, the ellipse approximates a parabola so closely that the difference is not significant. The corner provided by surfaces 12 and 20 is cut away to provide surfaces 24 and 26. Planar transparent surface 26 provides the output aperture.

Figure 1 shows that rays of light 28 and 30, reflected from a distant target, enter the receiver 10 through the transparent surface 12. Rays 28 and 30 then strike the elliptical or parabolic reflector 22. The elliptic curvature of the surface 22 is such that all rays are reflected to a line image at surface 26. Photodetectors 38 and 40 are mounted on the surface 26 parallel to the line image.

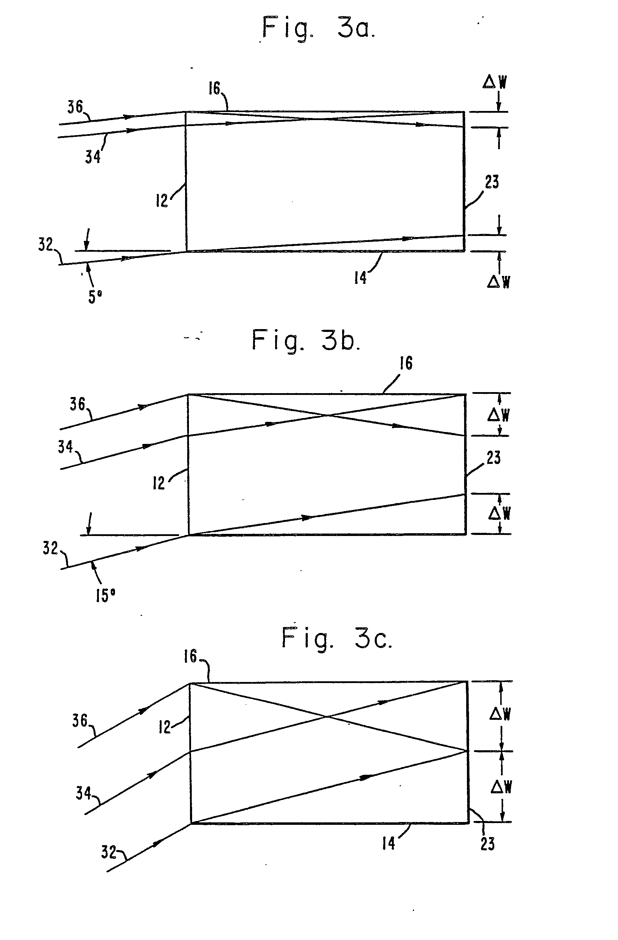

As illustrated in Figure 3, the power distribution along the length of the line image at surface 26' varies predictably with roll angle. In Figure 3, the receiver 10 is shown without the surface 22 for clarity of explanation. Rays 32, 34, and 36 are shown passing through surface 12 directly to flat surface 23. Rays 32 and 36 are the extreme rays that can enter the receiver 10. As shown in Figure 3a, ray 34 penetrates the surface 12 and terminates at the intersection of surfaces 16 and 23.

In the 0° azimuth case (not shown) all incoming rays enter the receiver 10 and uniformly illuminate the surface 23 with no side reflections or shadows. In the case of Figure 3a, rays 32, 34 and 36 strike surface 12 at a 5° angle. As a result, an area of width $\Delta W$ on surface 23 between extreme ray 32 and surface 14 is in shadow and receives no power. The top corner of the receiver 10 is illuminated by ray 34, but rays between ray 34 and extreme ray 36 are reflected off surface 16 onto surface 23. The area on surface 23 thus illuminated also has width $\Delta W$. As this area is also directly illuminated by rays between rays 32 and 34, the area of width $\Delta W$ receives double power, while the area between the double power area and the no power area receives unit power.

The 15° azimuth case of Figure 3b shows the same effect as the 5° azimuth case of Figure 3a. Note that the double and unit power areas of the 15° case have increased in size relative to those of the 5° case, while the unit power area has diminished. This suggests a relationship between the azimuth angle and the power distribution on the detector surface 23. The double power area and the no power area continue to expand with increasing roll or azimuth angle until the 22.5° case of Figure 3c is attained. At 22.5° the no power area and the double power area are each one half the detector surface area 23. There is no unit power area.

Up to this point, the power distribution on the detector surface 23 is unique for all roll angles. Since all light illuminating the detector surface 22 is reflected to a line image on surface 26, the power distribution along the length of the line image varies with roll angle in the manner described above.

The power distribution along the line image on surface 26 can be analyzed by conventional electronic techniques to determine the target azimuth as follows. Two photodetectors 38 and 40 are placed on surface 26 as shown in Figure 2. (A single line detector with a small break at its center may also be utilized.) Each detector covers an area between the center of the surface 26 and the edge of the receiver 10.

The radiant power on each detector is determined in the following manner. Since the initial radiance on the entrance aperture 12 is uniform, the energy distribution along the line image on surface 26 would be uniform except for those areas $\Delta W$ in which the radiant power has been doubled or deleted. Thus the power P on each detector is proportional to 1/2 the width W of the element $\pm \Delta W$. Accordingly, the power $P_1$ on the first detector 38 can be given by the expression:

(2) $$P_1 = K\left(\frac{W}{2} + \Delta W\right);$$

and the power $P_2$ on the second detector 40 can be given by the expression:

$$(3) \quad P_2 = K(\frac{W}{2} - \Delta W);$$

where K is a proportionally constant. It can be shown that:

$$(4) \quad W = 2L \; Tan \; Sin^{-1} \frac{Sin\theta}{n} max$$

and

$$(5) \quad \Delta W = L \; Tan \; Sin^{-1} \frac{Sin\theta}{n}$$

where
$\theta$ is the roll angle,
$\theta_{max}$ is the selected roll angle limit,
W is the element width,
L is the path length over which side reflections occur, and
n is the index of refraction of the element.

It follows that if $P_1 > P_2$ the energy is from the left of center and

$$(6) \quad \theta = \theta_{max} 2 \frac{P_1}{P_1 + P_2} - 1.$$

Similarly, if $P_2 > P_1$ the energy is from the right of center and

$$(7) \quad \theta = \theta_{max} 2 \frac{P_2}{P_1 + P_2} - 1.$$

Thus equations 6 and 7 permit the angle $\theta$ to be calculated by conventional electronic means utilizing only the power measured by the photodetectors 38 and 40 mounted on surface 26.

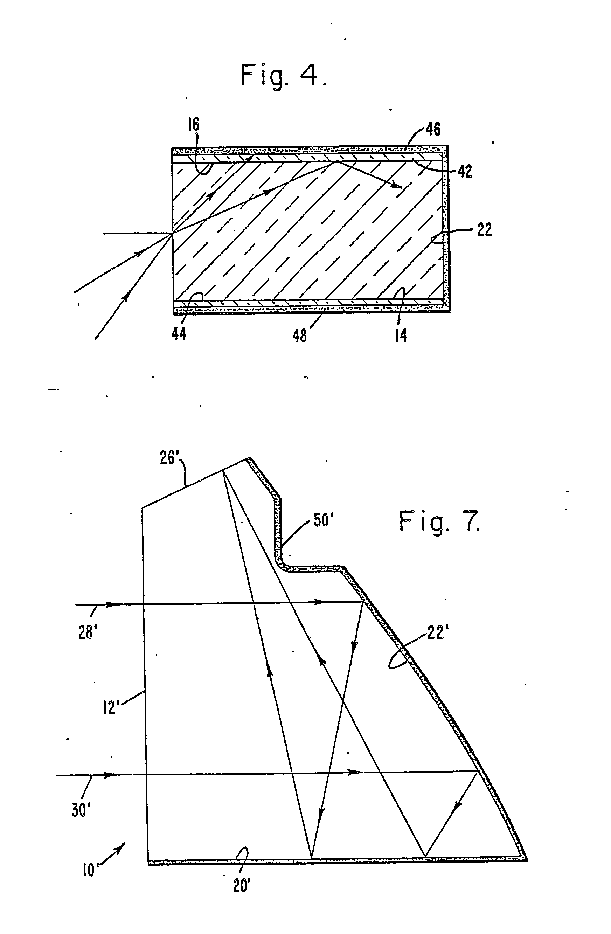

It should be noted that the angle $\theta_{max}$ of 22.5° in the preferred embodiment is a matter of design choice and totally arbitrary. As shown in Figure 4, any cutoff angle up to 90° could be obtained by selecting system parameters L, W and n within the ambit of equation (4) above and by applying optical cladding layers 42 and 44, of a lower index of refraction to the reflecting sides 16 and 18 of the receiver element 10. Rays entering the receiver 10 at roll angles less than $\theta_{max}$ will reflect without absorption off the cladding 42 or 44. Rays entering at roll angles greater than $\theta_{max}$ will penetrate the cladding 42 and 44 and impinge upon the black layers 46 and 48. The black layers 46 and 48 will thus remove such rays from the system by absorption.

The critical roll angle $\theta_{max}$ is related to the index of refraction of the glass (n) and the index of refraction of the cladding $n_c$ as follows:

$$(8) \quad Sin^2\theta_{max} = n^2 - n_c^2.$$

Chart 1 lists several acceptable combinations of glass and cladding.

CHART 1

| Glass | Index | Cladding | Index | Roll angle cut |
|---|---|---|---|---|
| Fused quartz | 1.4517 | SrF$_2$ | 1.40 | 22.58° |
| FK3 | 1.4576 | SrF$_2$ | 1.40 | 23.94° |
| BK1 | 1.5024 | SiO$_2$ | 1.4517 | 22.76° |
| K7 | 1.5031 | SiO$_2$ | 1.4517 | 22.94° |
| SF19 | 1.6497 | CeFl | 1.60 | 23.7° |
| BaSF2 | 1.6475 | CeFl | 1.60 | 23.13° |

For some of the core materials of Chart 1, the ratio of width W to length L of the receiver element 10 has been calculated and is listed in Chart 2.

CHART 2

| Material | n | W/L |
|---|---|---|
| SiO$_2$ | 1.4517 | .5466 |
| BK1 | 1.5024 | .5268 |
| SF19 | 1.6497 | .4770 |

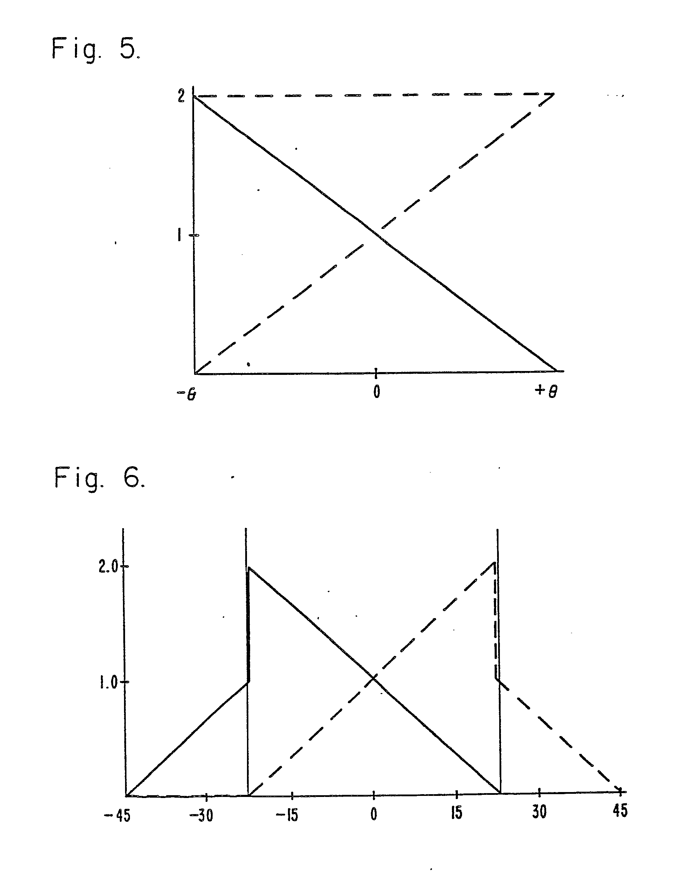

Figure 5 shows the relative power on the two detectors 38 and 40 and the sum of the power $(P_1 + P_2)$ as a function of roll angle $\theta$. The power on either detector 38 or 40 varies linearly with roll angle to less than 1% deviation. The power on the two detectors always sums to a constant for any given target. One detector has double illumination at $+\theta_{max}$ while the other has zero. At $-\theta_{max}$ the conditions are reversed.

Figure 6 shows that beyond $\theta_{max}$, in this case 22.5°, the detector having double power will suddenly fall to half its peak then decrease linearly to zero at the 45° azimuth. This is because at 22.5° the roll control limit $(\theta_{max})$ is reached and the half of the beam that was reflected is absorbed. The half of the beam that was not reflected will have more and more of its rays absorbed with increasing roll angle until at 45° it is totally absorbed.

This extension of sensitivity beyond 22.5° is of little significance since the limits of the azimuth of transmitted power can be set at $\theta_{max}$ (22.5°) so that no target illumination will exist in the undesired area. Transmitter beam control techniques are known in the industry and need not be discussed here.

Due to total internal reflectance, the side reflections of the receiver 10 are close to 100% efficiency within roll angle limits $\pm\theta_{max}$. Thus for detection and ranging calculations, the two detector outputs 38 and 40 can be summed with no loss in aperture sensitivity.

Figure 7 shows an alternate embodiment 10' of the receiver 10 of Figure 1. The embodiment of Figure 7 realizes the unique design of the receiver 10 while being somewhat more compact than the embodiment of Figure 1. The receiver 10' is a single block of solid glass. It has a planar transparent forward surface 12'. Planar reflective surfaces 14' and 16' (not shown) delimit the sides of the receiver 10'. These surfaces are clad and blackened in the same manner as surfaces 14 and 16 of receiver 10. The receiver 10' has an elliptical cylinder reflector 22' as a rear surface. The curvature of the surface 22' is also described by equation (1) above. Planar surface 20' is reflective. Surface 26' is transparent.

As shown in Figure 7, surface 12' is the input aperture and surface 26' is the output aperture of the receiver 10'. Incoming rays 28' and 30' are reflected by surfaces 22' and 20' to form a line image on surface 26'. As shown in the perspective view of Figure 8, photodetectors 38' and 40' (not shown) are mounted on surface 26' to detect the intensity variation along the line image on surface 26'.

Slot 50' is cut across surface 22' to block rays which cause a false line image at the surface 26' resulting from undesirable reflections due to targets at angles outside the range of the detector. This is especially important in minimizing detection of the sun or sunlit clouds in the vicinity of the detector surface. Saw slot 50' minimizes this potential problem by blocking rays which might be reflected by such clouds.

The embodiment of Figures 7 and 8 illustrates that the shape of the receiver 10 may be changed to meet a variety of requirements by those having ordinary skill in the art and the teachings of the present invention.

## Claims

1. A method for deriving the angle of incidence $\theta$ of electromagnetic energy with respect to a reference direction, in which the energy is directed to and focused at two image portions in such a way that the power distribution ($P_1$, $P_2$) between said image portions varies with said angle of incidence $\theta$, and in which the power distribution is measured and the angle of incidence $\theta$ is calculated from the measured power distribution, characterized in that the electromagnetic energy is reflected to a single line image having a total width W and being substantially centered on that reference direction, thereby defining two halves, each of width W/2, of the line image, the power distribution therealong being uniform except for its end sections each having a width $\Delta W$ varying with the angle of incidence, the power in one of said end sections being doubled and in the other one being zero, so that each half of the line image receives the power

$$P_1 = K(\frac{W}{2} + \Delta W)$$

or

$$P_2 = K(\frac{W}{2} - \Delta W),$$

respectively, where K is a proportional constant depending on the mode of reflecting and focusing of said incident energy and $\Delta W$ is a function of the sine of the angle of incidence $\theta$, and that each half of the line image forms one of said image portions in which the power distribution is measured.

2. An optical receiver for performing the method according to claim 1, including an element block (10) of transparent material having a first planar surface (12) forming a transparent input aperture, a parabolic interior reflecting surface (22), an image receiving surface (26) on which a line image reflected from said parabolic surface (22) is formed, and detector means (38, 40) mounted on the image receiving surface (26) along the line image to develop an electrical signal corresponding to the power of electromagnetic energy impinging thereon, characterized in that second and third planar surfaces (14, 16) extend normally from said first planar surface (12) and from said image receiving surface (26) so as to define a volume therebetween, said second and third surfaces shielding a first end section of the image receiving surface (26) against electromagnetic energy having an angle of incidence different from zero, and providing reflective interior side walls for said volume reflecting a portion of said electromagnetic energy onto a second end section of the image receiving surface (26), and that the detector means is comprised of two detectors (38, 40) positioned along the line image and each covering a half of the line image.

3. The receiver of claim 2, characterized in that said second and third surfaces (14, 16) are cladded so that energy entering said input aperture at angles of incidence in a predetermined range are reflected and while those entering at angles of incidence outside a predetermined range are not.

4. The receiver of claim 3, characterized in that a black layer (46, 48) is disposed on the reflective sides of said second and third surfaces (14, 16) to

absorb energy entering said input aperture (12) at angles of incidence outside said predetermined range.

5. The receiver of any one of claims 2 to 4, characterized in that said image receiving surface (26) is adjacent to said first planar surface (12).

6. The receiver of any one of claims 2 to 5, characterized in that said parabolic surface (22') includes a slot (50') which extends transversely thereover from said second surface (14') to said third surface (16').

**Patentansprüche**

1. Verfahren zur Bestimmung des Einfallswinkels θ elektromagnetischer Energie gegenüber einer Bezugsrichtung, bei dem die Energie in solcher Weise auf zwei Bildabschnitte gerichtet und darauf fokussiert wird, daß die Leistungsverteilung ($P_1$, $P_2$) auf diese Bildabschnitte von dem Einfallswinkel θ abhängig ist, und bei dem die Leistungsverteilung gemessen und der Einfallswinkel aus der gemessenen Leistungsverteilung berechnet wird, dadurch gekennzeichnet, daß die elektromagnetische Energie auf ein einziges Linienbild der Länge W reflektiert wird, das im wesentlichen zu der Bezugsrichtung zentriert ist, wodurch zwei Hälften des Linienbildes definiert werden, die jeweils die Länge W/2 aufweisen und auf denen die Leistung gleichmäßig verteilt ist, abgesehen von Endabschnitten, deren vom Einfallswinkel abhängige Länge ΔW beträgt und in denen die Leistung verdoppelt bzw. Null ist, so daß jede Hälfte des Linienbildes die Leistung $P_1=K(W/2+\Delta W)$ bzw. $P_2=K(W/2-\Delta W)$ empfängt, wobei K eine von der Art der Reflektion und der Fokussierung der einfallenden Energie abhängige Proportionalitätskonstante und ΔW eine Funktion des Sinus des Einfallswinkels θ ist, und daß jede Hälfte des Linienbildes einen der Bildabschnitte bildet, in denen die Leistungsverteilung gemessen wird.

2. Optischer Empfänger zur Durchführung des Verfahrens nach Anspruch 1 mit einem Grundkörper (10) aus transparentem Material, der eine erste ebene Fläche (12), die eine transparente Eingangsöffnung bildet, eine reflektierende parabolische Innenfläche (22) und eine Bildempfangsfläche (26), auf der ein von der parabolischen Innenfläche reflektiertes Linienbild erzeugt wird, umfaßt, und mit einer längs des Linienbildes auf der Bildempfangsfläche (26) angeordneten Detektoreinrichtung (38, 40) zur Erzeugung eines elektrischen Signales, das der Leistung der darauf einfallenden Energie entspricht, dadurch gekennzeichnet, daß zweite und dritte ebene Flächen (14, 16) sich zur ersten ebenen Fläche (12) und zur Bildempfangsfläche (26) senkrecht erstrecken, so daß sie ein Volumen begrenzen, daß die zweiten und dritten ebenen Flächen einen ersten Endabschnitt der Bildempfangsfläche (26) gegen elektromagnetische Energie abschirmen, deren Einfallswinkel von Null verschieden ist, und reflektierende innere Seitenwände für das Volumen bilden, die einen Anteil der genannten elektromagnetischen Energie auf einen zweiten Endabschnitt der Bildempfangsfläche (26) reflektieren, und daß die Detektoreinrichtung aus zwei Detektoren (38, 40) besteht, die längs des Linienbildes angeordnet sind und jeweils die Hälfte des Linienbildes bedecken.

3. Empfänger nach Anspruch 2, dadurch gekennzeichnet, daß die zweiten und dritten Flächen (14, 16) derart beschichtet sind, daß Energie, die in die Eingangsöffnung unter Winkeln einfällt, die ihnerhalb eines vorgegebenen Bereiches liegen, reflektiert werden, wogegen Energie, die unter außerhalb eines vorgegebenen Bereiches liegenden Winkeln einfällt, nicht reflektiert wird.

4. Empfänger nach Anspruch 3, dadurch gekennzeichnet, daß die reflektierenden Seiten der zweiten und dritten Flächen (14, 16) mit einer schwarzen Schicht (46, 48) versehen sind, damit die Energie absorbiert wird, die in die Eingangsöffnung (12) unter einem außerhalb des vorgegebenen Bereiches liegenden Winkel einfällt.

5. Empfänger nach einem beliebigen der Ansprüche 2 bis 4, dadurch gekennzeichnet, daß die Bildempfangsfläche (26) der ersten ebenen Fläche (12) benachbart ist.

6. Empfänger nach einem beliebigen der Ansprüche 2 bis 5, dadurch gekennzeichnet, daß die parabolische Fläche (22') einen Schlitz (50') aufweist, der sich quer darüber hinweg von der zweiten Fläche (14') zur dritten Fläche (16') erstreckt.

**Revendications**

1. Procédé pour établir l'angle d'incidence θ d'un rayonnement électromagnétique par rapport à une direction de référence, dans lequel le rayonnement est dirigé et focalisé en deux parties d'image de sorte que la distribution d'énergie ($P_1$, $P_2$) entre lesdites parties d'image varie avec l'angle d'incidence θ, et dans lequel la distribution d'énergie est mesurée et l'angle d'incidence θ est calculé à partir de la distribution d'énergie mesurée, caractérisé en ce que le rayonnement électromagnétique est réfléchi en une image de trait unique ayant une largeur totale W, cette image étant sensiblement centrée sur la direction de référence, définissant ainsi deux moitiés ayant chacune une largeur W/2 de l'image de trait, la distribution d'énergie le long de cette largeur étant uniforme sauf à ses parties d'extrémités dont chacune a une largeur ΔW qui varie avec l'angle d'incidence, l'énergie dans l'une des parties d'extrémité étant doublée et dans l'autre étant nulle de sorte que chaque moitié de l'image de trait reçoit l'énergie

$$P_1=K(\frac{W}{2}+\Delta W) \text{ ou } P_2=K(\frac{W}{2}-\Delta W)$$

respectivement, où K est une constante de proportionnalité qui dépend du mode de réflexion et de mise au point du rayonnement incident et

où ΔW est une fonction du sinus de l'angle d'incidence θ, et en ce que chaque moitié de l'image de trait forme l'une desdites parties d'image dans laquelle la distribution d'énergie est mesurée.

2. Récepteur optique pour mettre en oeuvre le procédé selon la revendication 1, comprenant un bloc (10) de matériau transparent ayant une première surface plane (12) formant une ouverture d'entrée transparente, une surface réfléchissante interne parabolique (22), une surface réceptrice d'image (26) sur laquelle est formée une image de trait réfléchie à partir de ladite surface parabolique (22), et un moyen détecteur (38, 40) monté sur la surface réceptrice d'image (26) le long de l'image de trait pour fournir un signal électrique qui correspond à l'énergie du rayonnement électromagnétique qui de frappe, caractérisé en ce que des deuxième et troisiène surfaces planes (14, 16) s'étendent normalement à la première surface plane (12) et à la surface recevant l'image (26) de façon à définir un volume entre elles, lesdites deuxième et troisième surfaces servant d'écran, pour une première partie d'extrémité de la surface réceptrice d'image (26), vis-à-vis d'un rayonnement électromagnétique ayant un angle d'incidence différent de zéro, et comprennent des parois latérales internes réfléchissantes pour ledit volume réfléchissant une partie du rayonnement électromagnétique sur une seconde partie d'extrémité de la surface recevant l'image (26), et en ce que le moyen détecteur comprend deux détecteurs (38, 40) positionnés le long de l'image de trait et couvrant chacun une moitié de l'image de trait.

3. Récepteur selon la revendication 2, caractérisé en ce que les deuxième et troisième surfaces (14, 16) sont revêtues de sorte que tout rayonnement entrant par l'ouverture d'entrée selon des angles d'incidence compris dans une gamme prédeterminée est réfléchi tandis que tout rayonnement entrant selon des angles d'incidence extérieurs à ladite gamme prédéterminée ne l'est pas.

4. Récepteur selon la revendication 3, caractérisé en ce qu'une couche noire (46, 48) est déposée sur les faces réfléchissantes des deuxième et troisième surfaces (14, 16) pour absorber le rayonnement entrant dans ladite ouverture d'entrée (12) à des angles d'incidence externes à ladite gamme prédéterminée.

5. Récepteur sur l'une quelconque des revendications 2 à 4, caractérisé en ce que ladite surface recevant l'image (26) est adjacente à la première surface plane (12).

6. Récepteur selon l'une quelconque des revendications 2 à 5, caractérisé en ce que ladite surface parabolique (22') comprend une fente (50') qui s'étend transversalement selon la largeur depuis la deuxième surface (14') jusqu'à la troisième surface (16').

Fig. 1.

Fig. 2.

Fig. 8.

# Fig. 3a.

ΔW

36
34
16
12
32
5°
23
14
ΔW

# Fig. 3b.

16
36
34
12
23
32
15°
ΔW
ΔW

# Fig. 3c.

16
12
36
34
32
ΔW
ΔW
14
23

Fig. 4.

Fig. 7.

Fig. 5.

Fig. 6.

4